# EUROPÄISCHE PATENTANMELDUNG

(11) **EP 1 167 244 A1**
(43) Veröffentlichungstag der Anmeldung: **02.01.2002**
(21) Anmeldenummer: 01114082.9
(22) Anmeldetag: 09.06.2001
(51) Int. Cl.: B65G 1/02

(54) **Regallager**

(30) Priorität: 30.06.2000 DE 20011520 U
(71) Anmelder: NEDCON MAGAZIJNINRICHTING B.V., NL-7000 AA Doetinchem (NL)
(72) Erfinder: De Jong, Leen-Pieter, 7051 GN Varsseveld (NL)
(74) Vertreter: Stenger, Watzke & Ring Patentanwälte

(57) **Zusammenfassung**

Vorgeschlagen wird ein Regallager zum Einlagern von Lagergut aufnehmenden Lagerbehältern (10), bei dem zwischen vertikalen Stützen (20) horizontal verlaufende, zweischenklige Auflagewinkel (30) zum Abstellen der Lagerbehälter (10) paarweise gegenüberliegend angeordnet sind. Ein erster Schenkel (31) der Auflagewinkel (30) verläuft im wesentlichen horizontal und bildet eine Auflagefläche zum Abstellen der Lagerbehälter. Um ein Regallager dahingehend zu verbessern, daß die die Auflagefläche bildenden Schenkel der Auflagewinkel eine geringere Durchbiegung erfahren, erstreckt sich der zweite Schenkel (32) der Auflagewinkel (30) von dem ersten Schenkel (31) nach unten. Vorzugsweise ist der die Auflagefläche bildende erste Schenkel (31) des Auflagewinkels (3) kürzer als dessen zweiter Schenkel (32) ausgebildet.

## Beschreibung

Die Erfindung betrifft ein Regallager zum Einlagern von Lagergut aufnehmenden Lagerbehältern, bei dem zwischen vertikalen Stützen horizontal verlaufende, zwei-schenklige Auflagewinkel zum Abstellen der Lagerbehälter paarweise gegenüberliegend angeordnet sind, wobei ein erster Schenkel der Auflagewinkel im wesentlichen horizontal verläuft und eine Auflagefläche zum Abstellen der Lagerbehälter bildet.

Derartige Regallager finden häufig als automatisierte Kleinteilelager Anwendung, bei dem eine rechnergesteuerte Ein- und Auslagerung des Lagerguts, das in Behältern, wie etwa Kartons oder Kästen, aufbewahrt wird, stattfindet. Die Behälter werden dabei mit Hilfe von innerhalb von Regalgassen verfahrbaren Regalbediengeräten am jeweiligen Lagerplatz positioniert. Dies bietet den Vorteil eines direkten Zugriffs auf jeden Artikel und eine insgesamt übersichtliche Lagerung.

Jeweils ein Paar Auflagewinkel bildet ein Lagerfach, in dem sich ein oder mehrere Behälter hintereinander einlagern lassen. Als Auflageflächen für die einzulagernden Behälter werden dabei die Oberflächen des jeweils ersten Schenkels der Auflagewinkel, welche sich im wesentlichen horizontal erstrecken genutzt.

Bei bekannten Regallagern werden die Auflagewinkel derart angeordnet, daß der zweite Schenkel der Auflagewinkel oberhalb der durch die beiden horizontal verlaufenden Schenkel eines Auflagewinkelpaares gebildeten Lagerebene angeordnet ist. Diese Schenkel werden gleichzeitig als seitliche Begrenzungen und Führungen für einzulagernde Behälter genutzt. Dabei sind die seitlichen Führungen insbesondere bei Regallagern, bei denen zwei oder mehrere Lagerbehälter hintereinander in einem Lagerfach eingelagert werden, von Vorteil.

Ein solches Regallager ist beispielsweise in dem deutschen Gebrauchsmuster DE 299 03 154.3 gezeigt. Bei dem hier gezeigten Regallager sind wie oben geschildert angeordnete Auflagewinkel zur Einlagerung von Lagerbehältern mit gegenüber der maximalen Seitenausdehnung verkleinerten Grundflächen unter Belassung eines Seitenabstandes zu den vertikalen Stützen vorgesehen.

Eine derartige Anordnung der Auflagewinkel mit sich oberhalb des Lagerfaches erstreckenden zweiten Schenkel bietet jedoch nicht nur den Vorteil, daß die einzulagernden Lagerbehälter eine seitliche Führung durch die zweiten Schenkel erfahren. Da bei derartigen Auflagewinkeln die Lagerbehälter sich im Regelfall nur auf einem Teil der die Auflagefläche bildenden horizontalen Schenkel abstützen, entstehen vergleichsweise starke Biegemomente, was zu einer Durchbiegung des Schenkels führt. Zusätzlich ist es erforderlich, den als Auflagefläche dienenden Schenkel des Auflagewinkels vergleichsweise ausgedehnt auszubilden, damit Lagerbehälter unterschiedlich breiter Grundflächen in dem Regallager abgestellt werden können. Derart ausgedehnt ausgeformte Schenkel bedingen allerdings einen vergleichsweise hohen Materialeinsatz. Insbesondere bei groß dimensionierten Regallagern mit einer großen Anzahl von Lagerfächern macht sich der erhöhte Materialeinsatz auch als Kosten erhöhender Faktor deutlich bemerkbar.

Der Erfindung liegt nunmehr die **Aufgabe** zugrunde, ein Regallager der eingangs genannten Art dahingehend zu verbessern, daß die die Auflagefläche bildenden Schenkel der Auflagewinkel eine geringere Durchbiegung erfahren.

Zur **Lösung** dieser Aufgabe wird mit der Erfindung vorgeschlagen, daß sich bei einem Regallager der eingangs genannten Art der zweite Schenkel der Auflagewinkel von dem ersten Schenkel nach unten erstreckt.

Bei einer derartigen Anordnung des Auflagewinkels ist es nunmehr möglich, die gesamte Oberfläche des im wesentlichen horizontal verlaufenden Schenkels als Auflagefläche zu nutzen, wodurch eine verringerte Biegebelastung dieses Schenkels erreicht werden kann. Zwar wird mit einer derartigen Anordnung des Auflagewinkels der Vorteil einer seitlichen Führung aufgegeben, jedoch ist dies insbesondere bei Regallagern, in deren Lagerfächern lediglich ein Lagerbehälter eingelagert werden soll, unerheblich, da in diesem Fall eine seitliche Führung nicht benötigt wird.

Eine Materialersparnis erhält man dann, wenn wie mit einer vorteilhaften Ausgestaltung der Erfindung vorgeschlagen, der die Auflagefläche bildende erste Schenkel des Auflagewinkels kürzer als dessen zweiter Schenkel ausgebildet ist. Insbesondere bei großen Regallagern kann die genannte Materialeinsparung bei den einzelnen Auflagewinkeln aufgrund der Vielzahl der benötigten Auflagewinkel zu einer erheblichen Kosteneinsparung beitragen. Darüber hinaus wirkt die Materialeinsparung für die Gesamtregalkonstruktion gewichtsreduzierend, was sich wiederum beim Transport des Regallagers sowie dessen Montage am Aufbauort vorteilhaft auswirkt. Trotz der Materialeinsparung bleibt die in dem Regallager aufnehmbare Nutzlast unverändert.

Gemäß einem weiteren vorteilhaften Vorschlag der Erfindung ist der zweite Schenkel des Auflagewinkels unter Belassung eines seitlichen Abstandes zu den vertikalen Stützen angeordnet. Dadurch wird erreicht, daß auch Lagerbehälter, deren Grundfläche kleinere Abmessungen aufweist als der Abstand der vertikalen Stützen sich nach Möglichkeit auf der gesamten Fläche der die Auflagefläche bildenden ersten Schenkel abstützen. Hierbei ist es weiterhin von Vorteil, wenn wie gemäß einem weiterhin vorgeschlagenen Merkmal der Erfindung der Abstand der zweiten Schenkel eines Paares von Auflagewinkel kleiner ist als die Breite der Grundfläche eines Lagerbehälters. Somit stützt sich der Lagerbehälter in jedem Fall auf der gesamten Fläche der die Lagerflächen bildenden ersten Schenkel ab, wobei die Last der Lagerbehälter zudem direkt auf den unterhalb der ersten Schenkel verlaufenden zweiten Schenkel ruht. Eine solche Anordnung der Auflagewinkel bietet eine besonders gute Festigkeit der die Auflagefläche bildenden ersten Schenkel sowohl hinsichtlich einer Durchbiegung des Schenkels selbst als auch hinsichtlich einer Torsionsbelastung.

Zur Verwirklichung des seitlichen Abstandes wird mit der Erfindung vorgeschlagen, daß der zweite Schenkel der Auflagewinkel im Bereich der vertikalen Stütze zu einem auswärts gerichteten Abstandhalter gebogen ist, der an den vertikalen Stützen befestigt ist und dessen Tiefe in zur Längsachse der Auflagewinkel senkrechter Richtung dem Abstand des die Auflagefläche bildenden ersten Schenkels der Auflagewinkel von den vertikalen Stützen entspricht. Durch die so erreichte einstückige Ausbildung von Abstandhalter und zweitem Schenkel der Auflagewinkel ist eine einfache und kostengünstige Fertigung sichergestellt. Weiterhin ist vorgesehen, daß der Abstandhalter als durch Umformen, vorzugsweise Eindrücken, gefertigte Ausbuchtung des zweiten Schenkels ausgebildet ist, die eine sich in Längsrichtung der Auflagewinkel erstreckende Stirnfläche zur Anlage an den vertikalen Stützen aufweist. Über eine derartige Stirnfläche kann der Auflagewinkel an den Stützen schnell und sicher montiert werden. Hierzu können beispielsweise Öffnungen in der vertikalen Stütze und in der Stirnfläche vorgesehen sein, durch die ein Verbindungsbolzen zum Aufbau einer Bolzenverbindung zwischen Auflagewinkel und Stütze hindurch geführt und anschließend gesichert werden kann.

Für die Stabilität des Auflagewinkels ist es besonders günstig, wenn wie gemäß einem weiteren Merkmal vorgesehen der Winkel zwischen dem ersten Schenkel und dem zweiten Schenkel der Auflagewinkel ein rechter Winkel ist.

Weiterhin ist es für die Ein- und Auslagervorgänge der Lagerbehälter von Vorteil, wenn, wie gemäß einem weiteren Merkmal der Erfindung vorgesehen, die Oberseite des die Auflagefläche bildenden ersten Schenkel als Gleitfläche ausgebildet ist. Somit kann ein auf den Auflageflächen abgestellter Lagerbehälter einfach und mit geringem Reibungswiderstand in Ein- bzw. Auslagerungsrichtung verschoben werden.

Schließlich wird mit der Erfindung vorgeschlagen, daß bei einem Regallager dieser Erfindung die Auflagewinkel einstückig aus kaltgewalzten Winkelprofilen gefertigt sind. Dies ist zum einen eine besonders kostengünstige Fertigungsmethode, und durch die Einstückigkeit der Winkelprofile wird der Aufwand zum Aufbau der Regalkonstruktion so weit wie möglich minimiert.

Weitere Merkmale und Vorteile der Erfindung ergeben sich aus dem nachfolgend anhand der beigefügten Figuren beschriebenen Ausführungsbeispiel eines erfindungsgemäßen Regallagers. Dabei zeigen:
- Fig. 1: eine Ansicht auf einen Ausschnitt aus einem erfindungsgemäßen Regallager mit zwei übereinander angeordneten mit Lagerbehältern belegten Lagerfächern und
- Fig. 2: in perspektivischer Ansicht einen Auflagewinkel für ein Regallager gemäß der vorliegenden Erfindung.

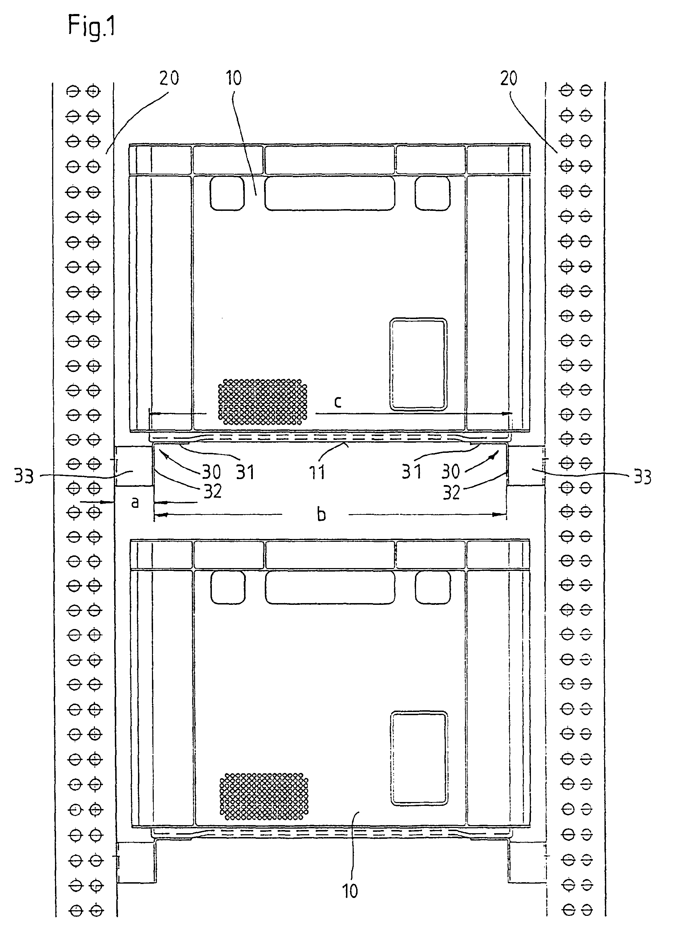

In Figur 1 ist ein Ausschnitt aus einem erfindungsgemäßen Regallager gezeigt, in welchem in zwei übereinander angeordneten Regalfächer Lagerbehälter 10 eingelagert sind. Die Lagerfächer werden dabei durch zwischen zwei vertikalen Stützen 20 einander zugewandt angeordnete Auflagewinkel 30 gebildet. Die Auflagewinkel 30 weisen jeweils einen ersten, im wesentlichen horizontal angeordneten Schenkel 31 auf, dessen Oberseite die Auflagefläche für den Lagerbehälter 10 bilden. Unterhalb des ersten Schenkels 31 und auch unterhalb des auf dem ersten Schenkel 31 ruhenden Lagerbehälters 10 erstreckt sich ein zweiter Schenkel 32 des Auflagewinkels. Dabei ist zwischen dem ersten Schenkel 31 und dem zweiten Schenkel 32 des Auflagewinkels 30 ein rechter Winkel ausgebildet. Über einen mit dem zweiten Schenkel 32 verbundenen Abstandhalter 33 ist der Auflagewinkel 30 jeweils mit einer der vertikalen Stützen 20 verbunden. Dabei ist zwischen der vertikalen Stütze 20 und dem zweiten Schenkel 32 des jeweiligen Auflagewinkels 30 ein seitlicher Abstand a belassen. Der Abstand b der zweiten Schenkel 32 der gegenüberliegenden Auflagewinkel 30 ist dabei kleiner bemessen als die Breite c der Grundfläche 11 des Lagerbehälters 10.

Wie in dieser Figur zu erkennen ist, lastet der Lagerbehälter 10 über die gesamte Breite auf den ersten Schenkeln 31 und bis über die sich im wesentlichen vertikal erstreckenden zweiten Schenkel 32 der Auflagewinkel 30. Dies führt zu einer erhöhten Stabilität und ermöglicht es, den ersten Schenkel 31 des Auflagewinkels 30 kürzer auszuführen als den zweiten Schenkel 32, wie dies ebenfalls der Figur zu entnehmen ist. In den zwischen den beiden Lagerbehältern 10 gebildeten vertikalen Zwischenraum kann nun zum Ein- bzw. Auslagern der Lagerbehälter 10 ein Regalbediengerät mit entsprechenden, die Lagerbehälter 10 ergreifenden Bestandteile hineinfahren und die Lagerbehälter 10 von ihrer Grundfläche 11 her ergreifen.

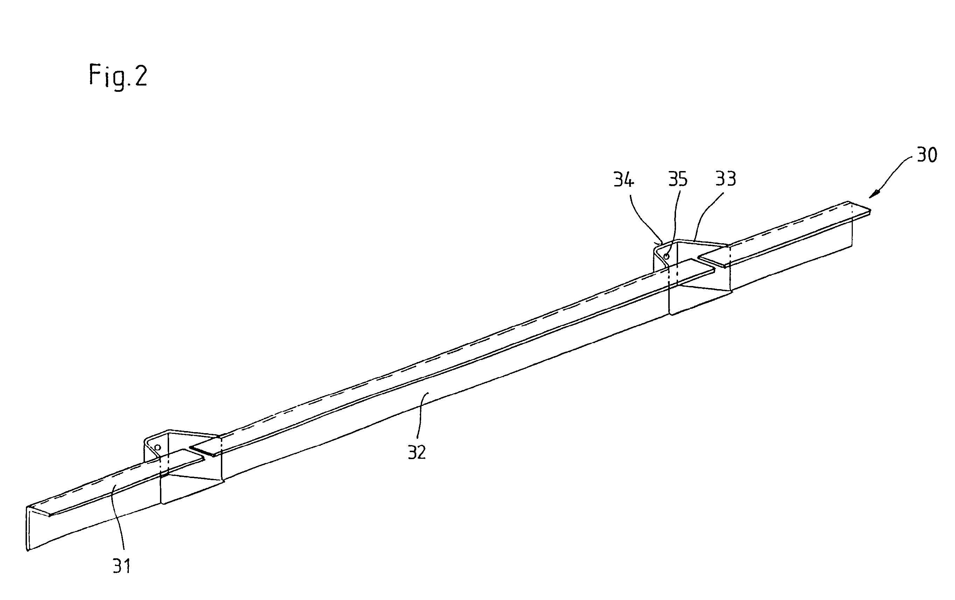

In Figur 2 ist in perspektivischer Darstellung ein Auflagewinkel 30 gezeigt. Auch hier ist zu erkennen, daß der erste Schenkel 31 kürzer ausgebildet ist als der zweite Schenkel 32, was zu der erwünschten Materialeinsparung führt. Weiterhin kann hier erkannt werden, daß zur Ausbildung der Abstandhalter 33 in dem zweiten Schenkel 32 trapezförmige Ausbuchtungen ausgebildet sind, wobei der Abstand zwischen den Ausbuchtungen längs des Auflagewinkels 30 den Abstand zweier vertikaler Stützen in Montagerichtung des Auflagewinkels 30 entspricht. An den als Abstandhalter 33 dienenden, trapezförmigen Ausbuchtungen sind Stirnflächen 34 zu erkennen, welche sich zur Montage des Auflagewinkels 30 an den vertikalen Stützen der Regalkonstruktion abstützen. Zur Befestigung sind in den Stirnflächen 34 Löcher 36 vorgesehen, durch welche Befestigungsbolzen in entsprechende Löcher in den vertikalen Stützen geführt und beispielsweise durch Verschraubung festgelegt werden können.

Wie zu erkennen ist, ist der hier gezeigte Auflagewinkel einstückig ausgeformt, wodurch geringe Herstellungskosten sowie ein geringer Montageaufwand erzielt werden.

### Bezugszeichenliste

- 10: Lagerbehälter
- 11: Grundfläche
- 20: Stütze
- 30: Auflagewinkel
- 31: Schenkel
- 32: Schenkel
- 33: Abstandhalter
- 34: Stirnfläche
- 35: Loch
- a: Abstand
- b: Abstand
- c: Breite

## Patentansprüche

1. Regallager zum Einlagern von Lagergut aufnehmenden Lagerbehältern (10), bei dem zwischen vertikalen Stützen (20) horizontal verlaufende, zweischenklige Auflagewinkel (30) zum Abstellen der Lagerbehälter (10) paarweise gegenüberliegend angeordnet sind, wobei ein erster Schenkel (31) der Auflagewinkel (30) im wesentlichen horizontal verläuft und eine Auflagefläche zum Abstellen der Lagerbehälter bildet,
**dadurch gekennzeichnet,**
**daß** sich der zweite Schenkel (32) der Auflagewinkel (30) von dem ersten Schenkel (31) nach unten erstreckt.

2. Regallager nach Anspruch 1, **dadurch gekennzeichnet, daß** der die Auflagefläche bildende erste Schenkel (31) des Auflagewinkels (30) kürzer als dessen zweiter Schenkel (32) ausgebildet ist.

3. Regallager nach einem der Ansprüche 1 oder 2, **dadurch gekennzeichnet, daß** der zweite Schenkel (32) des Auflagewinkels (30) unter Belassung eines seitlichen Abstandes (a) zu den vertikalen Stützen (20) angeordnet ist.

4. Regallager nach Anspruch 3, **dadurch gekennzeichnet, daß** der seitliche Abstand (a) derart gewählt ist, daß der Abstand (b) der zweiten Schenkel (32) eines Paares von Auflagewinkeln (30) kleiner ist als die Breite (c) der Grundfläche (11) eines Lagerbehälters (10).

5. Regallager nach einem der Ansprüche 1 bis 4, **dadurch gekennzeichnet, daß** der zweite Schenkel (32) der Auflagewinkel (30) im Bereich der vertikalen Stützen (20) zu einem auswärts gerichteten Abstandhalter (33) gebogen ist, der an den vertikalen Stützen (20) befestigt ist und dessen Tiefe in zur Längsachse der Auflagewinkel (30) senkrechter Richtung dem Abstand (a) des die Auflagefläche bildenden ersten Schenkels (31) der Auflagewinkel (30) von den vertikalen Stützen (20) entspricht.

6. Regallager nach Anspruch 5, **dadurch gekennzeichnet, daß** der Abstandhalter (33) als durch Umformen, vorzugsweise Eindrücken, gefertigte Ausbuchtung des zweiten Schenkels (32) ausgebildet ist, die eine sich in Längsrichtung der Auflagewinkel (30) erstreckende Stirnfläche (34) zur Anlage an den vertikalen Stützen (20) aufweist.

7. Regallager nach einem der Ansprüche 1 bis 6, **dadurch gekennzeichnet, daß** der Winkel zwischen dem die Auflagefläche bildenden ersten Schenkel (31) und dem zweiten Schenkel (32) ein rechter Winkel ist.

8. Regallager nach einem der Ansprüche 1 bis 7, **dadurch gekennzeichnet, daß** die obere Seite des die Auflagefläche bildenden ersten Schenkels (31) als Gleitfläche ausgebildet ist.

9. Regallager nach einem der vorhergehenden Ansprüche, **dadurch gekennzeichnet, daß** die Auflagewinkel (30) einstückig aus kaltgewalzten Winkelprofilen gefertigt sind.
